# EUROPEAN PATENT SPECIFICATION

(11) **EP 4 262 419 B1**
(45) Date of publication and mention of the grant of the patent: **26.11.2025**
(21) Application number: 21820627.4
(22) Date of filing: 06.12.2021
(51) Int. Cl.: A23F 5/04, A23F 5/08, A23F 5/12, B03C 3/011, B03C 3/017, B03C 3/019, B03C 3/02, B03C 3/08, B03C 3/12, B03C 3/36, B03C 3/41, B03C 3/47, B03C 3/68, B03C 3/78, G05B 19/04, G05B 19/042

(54) **METHOD TO ROAST COFFEE BEANS**
VERFAHREN ZUM RÖSTEN VON KAFFEEBOHNEN
PROCÉDÉ DE TORRÉFACTION DE GRAINS DE CAFÉ

(30) Priority: 18.12.2020 EP 20215341
(43) Date of publication of application: 25.10.2023
(73) Proprietor: Société des Produits Nestlé S.A., 1800 Vevey (CH)
(72) Inventor: MOREND, Joël, 1553 Châtonnaye (CH); DUBIEF, Flavien, Florent, 1424 CHAMPAGNE (CH); DEGREEF, Thomas, Rudi, S., 1850 Grimbergen (BE); CELIS, Michiel, Alexander, 9000 GHENT (BE); LEMMENS, Rien, Denise, M., 2530 BOECHOUT Antwerp (BE); BAEKELANDT, Maxime, 9000 Gent (BE)
(74) Representative: Ducreux, Marie
(86) International application number: PCT/EP2021/084441
(87) International publication number: WO 2022/128580

(56) References cited:
- EP-A1- 1 041 891
- WO-A1-2020/084134
- WO-A1-98/31974
- GB-A- 2 535 528
- US-A1- 2013 047 858
- US-A1- 2016 016 181

## Description

### Field of the invention

The present invention relates to a method to and a system for roasting coffee beans in a safe environment. The invention also relates to a computer program and a computer readable storage medium and is set out in the appended set of claims.

### Background of the invention

The roasting of coffee beans is a well-known process. The main steps consists in heating the beans to a desired roasting level and then cooling or quenching the heated beans to stop the roasting. During heating, smoke is emitted. This smoke contains safe and desired components all together, in particular the usual roasted coffee aroma, but also undesired less safe volatile organic compounds (VOC) VOC such as pyridine, 2-furane methanol, caffeine furfural, formaldehyde, acetaldehyde, ... and particulate matter (PM_{2.5}, PM₁₀), ... When roasting is implemented in manufacturing places producing important quantities of roasted beans, generally all the conditions for catching unsafe components are supplied.

But, there is a recent trend to implement small batch roasting with small roasters in shops, restaurants and coffees where customers are able to consume coffee brewed from freshly roasted beans. The roaster does not only provide freshness and theater advantages, but also dispenses the pleasant roasted coffee aroma inside the shop or coffee. Relevant prior art systems and methods for roasting coffee beans are disclosed in WO 2020/084134 A1.

Yet, as mentioned above, harmful components are emitted too. When the roaster is used in a closed environment like a shop, coffee or restaurant, the emission of some components can become harmful depending on the size of the room, the ventilation of the room, ... For people working several hours in the room, smelling the smokes of the roaster can lead to a health problem.

As a result, in such an environment, it is recommended to stop the emission of smoke from the roaster to avoid any healthy issue for people present in the shop. The existing solutions consist in destroying contaminants, such as an afterburner enabling thermal oxidation of contaminants or a catalytic afterburner or retaining contaminants inside the apparatus like mechanical filters (metallic sieves or paper filter), an active carbon filter or an electrostatic precipitator or combination thereof.

An electrostatic precipitator catches some PM, usually with size comprised between 1.0 and 10 µm. The advantages of an electrostatic precipitator is its low cost of purchase and use, the absence of noise or heat generated during its use. Since, the electrostatic precipitator traps the contaminants that remain attached to the electrified cell of the electrostatic precipitator, the apparatus must be regularly cleaned.

An alert for cleaning can be set based on the maximal number of hours during which the roaster was operated or based on a maximal quantity of coffee beans that were roasted. But this alert is not fully accurate and may request the operator to clean the filter too late with the result of a lack of efficiency in filtering during the last roasting operations and not guaranteeing a safe environment for people around the roaster. In addition, the operator may disregard this alarm and go on roasting since the system of the roaster and the filter is still operable though not efficient in terms of filtering.

In particular, if the cleaning operation is not operated on time, a problem specific to electrostatic precipitators is the generation of breakdowns due to the presence of the particles inside the device. Although these breakdowns can be quite short, during the time they do happen, the smoke is not filtered with at least two undesired effects :
- first, particulate matters can be emitted in the room of the café, shop or restaurant where people are present,
- secondly, a part of non-filtered particulate matters can plug other filters positioned downstream the electrostatic precipitator, like an active carbon filter. As a result, VOCs are not filtered by this filter any longer which increases health issues inside the public room.
- finally, the electrostatic precipitator device can be damaged.

These breakdowns can be due to the fact that the electrostatic precipitator is reaching its limit of collection of particles, which happens when the operator has neglected an earlier cleaning alarm. They can also be due to the abnormal presence of some big particles that are normally trapped upstream the electrostatic precipitator like chaffs of coffee beans, and that flow exceptionally and inside the electrostatic precipitator where they are blocked and creates breakdowns. They can also be due to a technical problem of the electrostatic precipitator itself.

### Summary of the invention

An object of the invention is to address the above existing problems.

In particular, an object of the invention is to address the problem of informing the operator that a breakdown is happening and that it is necessary to clean or to operate maintenance of the electrostatic precipitator smoke filter and to provide said information in an accurate manner.

It would be advantageous to differentiate false breakdowns from breakdowns that really impact the filtering capacity of the electrostatic precipitator. The invention is set out in the appended claims.

In a first aspect of the invention, there is provided a method to roast coffee beans in a roasting system, said system comprising :
- a roasting apparatus, and
- a smoke treating unit configured to treat the smoke produced by the roasting apparatus,
   . said smoke treating unit comprising an electrostatic precipitator,
   . said electrostatic precipitator comprising at least one cell,
   . said cell comprising ionization wires, collecting electrodes and repelling electrodes, and
   . said cell being supplied with an electrical power in order to apply a high voltage V to the ionization wires and at least a part of the electrodes,
wherein, during each roasting operation implemented in the roasting apparatus, the method comprises the steps of :
- monitoring the voltage V at the ionization wires and/or at the electrodes along the time of the roasting operation,
- if the monitored voltage becomes inferior to a pre-determined voltage threshold V₀ during a period of time Δt of the roasting operation, and
- if said period of time Δt is superior to a pre-determined time threshold Δt0, then displaying a cleaning alarm.

The method relates to the roasting of coffee beans by means of a system that comprises two apparatuses : first, the roasting apparatus in which beans are heated to be roasted and, secondly, the smoke treating unit configured to treat the smoke generated inside the first roasting apparatus during the roasting of the coffee beans.

The two apparatuses can be sub-parts of one single main system or alternatively, the two apparatuses can be conceived as separated modules cooperating together during the process of roasting.

Any type of roasting apparatus can be used. In the roasting apparatus, coffee beans are heated and preferably mixed to homogenise heating through the beans.

The source of heating can be a burner (meaning combustion) fed by natural gas, liquefied petroleum gas (LPG) or even wood. Alternatively the heat source can be an electrical resistor, a ceramic heater, a halogen source, a source of infrared or of microwaves.

Preferably the source of heating is electrically powered so that the air contaminants produced during the roasting are contaminants generated from the heating of coffee beans themselves only and not from the burning of gases as it happens when the source of heating is a gas burner using natural gas, propane, liquefied petroleum gas (LPG) or even wood.

The mixing of the beans during the roasting operation can be obtained with a fluidic bed of hot air or mechanically with stirring blades or a rotating drum.

Preferably the roasting apparatus is hot air fluid bed chamber. Within such a chamber, heated air is forced through a screen or a perforated plate under the coffee beans with sufficient force to lift the beans. Heat is transferred to the beans as they tumble and circulate within this fluidized bed.

Alternatively the roasting apparatus can be a drum chamber wherein the coffee beans are tumbled in a heated environment. The drum chamber can consist of a drum rotating along a horizontal axis or the drum chamber can comprise stirring blades to tumble the coffee beans in a heated environment.

The roasting apparatus comprises an outlet from which smoke produced during the roasting operation can be evacuated.

Generally, the smoke treating unit of the system comprises a smoke inlet configured to cooperate with this smoke outlet of the roasting apparatus and to collect smoke through this smoke inlet.

The smoke treating unit treats the smoke in order to reduce or eliminate harmful contaminants the smoke contains, in particular particulate matters such as PM₁, PM_{2.5} and PM₁₀.

This smoke treating unit comprises at least an electrostatic precipitator.

An electrostatic precipitator is a particulate collection device that filters a smoke by removing particles from the smoke stream using an electrostatic charge.

The electrostatic precipitator comprises one or more cells. Each cell is identical and comprises :
- ionization or corona metal wires in an upstream ionization area, and
- collecting electrodes and repelling electrodes in a downstream collecting area. Usually he electrodes presents the form of plates. An electrical field is generated through the electrodes and perpendicular to the flow of the smoke. This field is generated by applying different voltages to the electrodes of the couple or by applying a voltage to one electrode and connecting the other electrode to the ground. Several couples of a collecting electrode and a repelling electrode spaced apart from each other can be associated and allow the smoke to flow in the spaces there between.

Usually the ionization wires are supplied with electrical power in order to apply a high voltage V to the ionization wires. Particles of the smoke flowing through said ionization area become ionised that is charges either positively or negatively.

Then when the stream of smoke passes through the downstream metal plates, the collecting electrodes become a collector of ionised particles : the charged particles are attracted to and move towards the plates and form a layer that stays on the plates. The exiting smoke stream is thus cleaned from the charged particles that have collected on the collecting electrodes. Electrostatic precipitators can be used to trap particles presenting size comprised between 1,0 and 10 µm.

If the electrostatic precipitator comprises several cells, these cells are positioned successively in the flow stream of smoke, the first cell filtering the majority of the particles of the smoke and the second cell filtering the smoke treated by the first cell to achieve an improved separation.

When a roasting operation is implemented in the roasting apparatus, the method comprises the steps of :
- monitoring the voltage V at the ionization wires and/or at the electrodes along the time of the roasting operation,
- if the monitored voltage becomes inferior to a pre-determined voltage threshold V0 during a period of time Δt of the roasting operation, and
- if said period of time Δt is superior to a pre-determined time threshold Δt0, then displaying a cleaning alarm.

This voltage threshold V0 can be pre-defined so that when a roasting operation is implemented and monitored voltage V falls under said lower voltage threshold for a period of time superior to the pre-determined time threshold Δt0, it means an electrical breakdown is happening. If the period of time is shorter, then the low monitored voltage is a false breakdown and must not be considered.

Then, when during one particular roasting operation, the lower values of the monitored voltage becomes inferior to said lower voltage threshold V0 for a very short period of time, these values are not taken into account.

Usually the lower voltage threshold V0 is set in view of the high voltage applied to the ionization wires and based on experimental data as described below.

Usually the voltage threshold V0 depends on the electrostatic precipitator configuration, in particular on the applied high voltage, and can be determined further to experimentations. Usually this threshold is far inferior to the high voltage applied to the ionization wires and the electrodes, preferably 10 times inferior to the applied high voltage.

In one preferred embodiment, the lower pre-determined voltage threshold V0 can be inferior to 100 V.

In particular, for a high voltage applied to the ionization wires or the electrodes that is superior to 5 kV, the lower pre-determined voltage threshold V0 can be inferior to 100 V.

In one embodiment, the length of the pre-determined time threshold Δt0 can depend on the level of roasting implemented during the roasting operation and/or on the type of beans roasted during the roasting operation.

Actually it has been observed that different levels of roasting (light, medium, dark) produce different amounts of PM for the same quantity of beans. In particular, it has been observed that roasting at a dark level emits more emissions than roasting at a light level.

Similarly, it has been observed that some types of beans produce higher amounts of PM that others.

When the roasting conditions (level, type of beans) produce more particulates, then there is an increased risk that particulates remain briefly blocked between the electrodes and create false breakdowns. To avoid that these false breakdowns, either numerous or longer, impact the detection of the conditions for displaying a cleaning alarm, the pre-determined time threshold Δt0 can be adjusted and increased during the roasting operation at a dark level or during the roasting operation of a type of beans producing a lot of PMs compared to the pre-determined time threshold Δt0 during the roasting operation at a light level or during the roasting operation of a type of beans producing less PMs.

In another embodiment, the length of the pre-determined time threshold Δt0 can depend on the number of roasting operations implemented since the last cleaning operation of the electrostatic operator.

As the electrostatic precipitator becomes more and more dirtied, the layer of particulate matters present on the collecting electrode becomes thicker and there is an increasing risk that particulates remain briefly blocked between the electrodes and create false breakdowns. To avoid that these false breakdowns, either numerous or longer, impact the detection of the conditions for displaying a cleaning alarm, the pre-determined time threshold Δt0 can be increased progressively or by steps depending on the number of roasting operations implemented since the last operation of cleaning of the electrostatic precipitator.

In another embodiment, the length of the pre-determined time threshold Δt0 can vary along the roasting operation.

It is known that during a roasting operation, the production of PMs is not constant and that a peak occurs at a time that is closer to the end of the roasting operation rather than to the beginning.

In a similar approach as explained above, in order to avoid that false breakdowns, either numerous or longer, impact the detection of the conditions for displaying a cleaning status requirement, the pre-determined time threshold Δt0 can be set longer at the end of the roasting operation.

Usually the pre-determined time threshold Δt0 is of about few seconds, for example inferior to 10 sec, preferably inferior to 5 sec.

Usually the smoke treating unit comprises a high voltage process control board configured to control the electrostatic precipitator and the monitored voltage is read from said process control board.

In one preferred embodiment, the electrostatic precipitator comprises at least two cells, said cells being positioned successively one after the other along the flow of the smoke emitted by the roaster, and said method is applied on each of the cells.

Accordingly, the method enables the detection of problematic breakdowns in each of the cells.

Preferably, if, for the two cells, the monitored voltage V is inferior to the lower voltage threshold V0 during the same period of time Δt of the roasting operation and said period of time is superior to the pre-determined time threshold Δt0, then an alarm for technical maintenance is displayed.

Preferably, the smoke treating unit comprises at least one other filtering device than the electrostatic precipitator. This other filtering device can be comprised in the list of : a high efficiency particulate accumulator filter, a metallic filter, an active carbon filter, paper filter, cotton, cloth. Optionally, the smoke treating unit can comprise additional filtering devices like wet-scrubbers, catalytic converters, afterburners.

Filters configured for trapping VOCs are preferably active carbon filter or charcoal filter.

Preferably, the smoke filtering sub-unit comprises successively, according to the direction of the flow of the smoke inside the smoke treating unit, at least one filter to remove particulate matters and then the electrostatic precipitator and then an active carbon filter. This order prevents the active carbon filter from being clogged by particulate matters.

The smoke is driven inside the smoke treating unit and the different filters by means of a smoke driver configured to circulate smoke through the smoke treating unit from the inlet to the outlet of the smoke treating unit. At the outlet, the treated flow can be safely released inside the atmosphere of a room since the smoke and the contaminants have been trapped. The smoke driver is generally a fan driving the smoke to the outlet.

Preferably the fan is positioned next to the outlet of the smoke treating unit. As a result, the fan is not contaminated by the non-treated smoke and its maintenance is easier.

According to one preferred embodiment, the smoke filtering sub-unit comprises at least successively :
- a metallic mesh, then
- the electrostatic precipitator, and then
- an active carbon filter according to the movement of the flow of the smoke inside the smoke treating unit.

Preferably within this embodiment, the active carbon filter is positioned physically above the electrostatic precipitator. Accordingly, the smoke is introduced upwardly through the successive devices.

In a second aspect, there is provided a system for roasting coffee beans, said system comprising :
- a roasting apparatus, and
- a smoke treating unit configured to treat the smoke produced by the roasting apparatus, said smoke treating unit comprising at least an electrostatic precipitator,
   said electrostatic precipitator comprising at least one cell,
   said cell comprising ionization wires, collecting electrodes and repelling electrodes , and
   said cell being supplied with an electrical power in order to apply a high voltage to the ionization wires and at least a part of the electrodes, and
- a control system at the smoke treating unit, comprising a control unit, a memory unit, and a voltage sensor for the ionization electrode, said control system being configured to carry out the method of at least claim 1.

Depending on the integration of the roasting apparatus and the smoke treating unit, the control system can be shared between both apparatuses and the steps of the method can be shared between the control units of at least these two apparatuses.

In one embodiment, the method can be executed by the control unit of the roasting apparatus and by the control unit of the smoke treating unit, both control units communicating together. In particular:
- the control unit of the smoke treating unit can implement the steps of :
   . monitoring voltage V,
   . comparing said monitored voltage V with the pre-determined voltage threshold V0 and optionally the period of time with the pre-determined time threshold Δt,
   . if necessary communicating the cleaning requirement status to the roasting apparatus,
- the control unit of the roasting apparatus can implement the step of displaying the cleaning alarm.

In another embodiment,
- the control unit of the smoke treating unit can implement the steps of :
   . monitoring voltage V, and
   . communicating the values of said monitored voltage V to the roasting apparatus, and
- the control unit of the roasting apparatus can implement the steps of :
   . comparing said monitored voltage V with the pre-determined voltage threshold V0 and the period of time Δt with the pre-determined time threshold Δt0,
   . if necessary displaying the cleaning alarm.

In another embodiment, the control unit of smoke treating unit can implement all the steps after receiving information that a roasting step is starting from the roasting apparatus.

Preferably, the roasting apparatus can comprise a display unit in order to display the cleaning alarm.

Alternatively, the electrostatic precipitator can comprise a means to display the cleaning alarm such as a lighting button.

In another alternative, the control system can be configured to display the cleaning alarm on a mobile device in communication with the system.

In a third aspect, there is provided a computer program comprising instructions to cause the above system according to the second aspect to perform the above method according to the first aspect.

In one embodiment, the computer program can be executed by the control unit of the roasting apparatus and by the control unit of the smoke treating unit, both control units communicating together. In particular:
- the control unit of the smoke treating unit can implement the steps of :
   . monitoring voltage V,
   . comparing said monitored voltage V with the pre-determined voltage threshold V0 and the period of time Δt with the pre-determined time threshold Δt0,
   . if necessary communicating the cleaning requirement status to the roasting apparatus,
- the control unit of the roasting apparatus can implement the step of displaying the cleaning alarm.

In another embodiment,
- the control unit of the smoke treating unit can implement the steps of :
   . monitoring voltage V, and
   . communicating the values of said monitored voltage V to the roasting apparatus, and
- the control unit of the roasting apparatus can implement the steps of :
   . comparing said monitored voltage V with the pre-determined voltage threshold V0 and the period of time Δt with the pre-determined time threshold Δt0,
   . if necessary displaying the cleaning alarm.

In another embodiment, the control unit of smoke treating unit can implement all the steps after receiving information that a roasting step is starting from the roasting apparatus.

In a fourth aspect, there is provided computer readable storage medium having stored thereon the above computer program according to the third aspect.

### Brief description of the drawings

Specific embodiments of the invention are now described further, by way of example, with reference to the following drawings in which :
- Figure 1 is a view of a system according to the present invention illustrating the path of the smoke through the system,
- Figure 2 illustrates one of the cell of the electrostatic precipitator part of the smoke treating unit of Figure 1,
- Figure 3 shows a block diagram of a control system of the system according to Figures 1 and 2.
- Figures 4A and 4B describe the voltage at the ionization wires monitored along the time of roasting operations.

### Detailed description of exemplary embodiments

### System for roasting

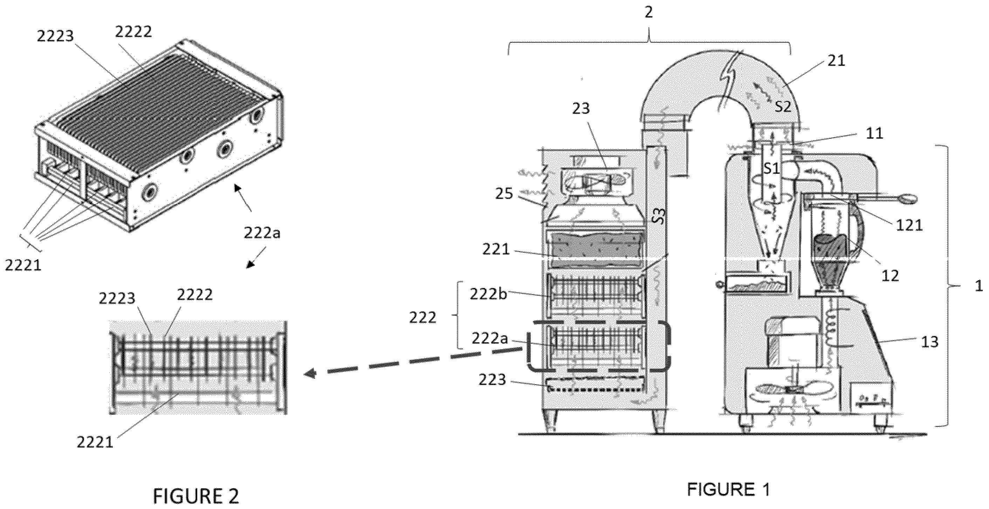

**Figure 1** shows an illustrative view of a system of a roasting apparatus 1 and a smoke treating unit 2. Functionally, the roasting apparatus is operable to roast coffee beans and the smoke treating unit is operable to treat the smoke generated during roasting by the roasting apparatus.

### Roasting apparatus

The roasting apparatus 1 is operable to receive and roast coffee beans inside a roasting chamber 12.

Preferably, the roasting apparatus 1 comprises a roasting chamber 12 in which a flow of hot air is introduced to agitate and heat the beans. The hot air flow is usually produced by an air flow driver and a heater. These devices are positioned below the roasting chamber and introduce the flow of hot air through the bottom of the chamber. In the illustrated figure, the bottom of the chamber is configured to enable air to pass through, specifically it can be a perforated plate on which the beans can lie and through which air can flow upwardly.

The air flow driver is operable to generate a flow of air upwardly in direction of the bottom of the vessel. The generated flow is configured to heat the beans and to agitate and lift the beans. As a result, the beans are homogenously heated. Specifically, the air flow driver can be a fan powered by a motor. Air inlets can be provided inside the base of the housing in order to feed air inside the housing, the air flow driver blowing this air in direction of the chamber 12.

The heater is operable to heat the flow of air generated by the air flow driver. Preferably, the heater is an electrical resistance positioned between the fan and the perforated plate with the result that the flow of air is heated before it enters the chamber 12 to heat and to lift the beans.

The heater and/or the fan are operable to apply a roasting profile to the beans, this roasting profile being defined as a curve of temperature against time.

Preferably, the roasting apparatus comprises a user interface 13 enabling :
- the input of information about the roasting, in particular the quantity of beans introduced inside the roasting chamber and the desired level of roasting, and the output of information about the roasting operation (status, temperature, time) and
- preferably about the output of information about the smoke treating unit 2 in particular about the cleaning of the electrostatic precipitator 222.

The roasting of the beans generates a smoke that is driven to the top opening 121 of the roasting chamber due to the flow of air generated by the air flow driver and as illustrated by arrow S1 in Figure 1.

Generally a chaff collector is in flow communication with the top opening 121 of the chamber to receive chaffs that have progressively separated from the beans during roasting and due to their light density are blown off to the chaff collector.

The rest of the smoke is evacuated through the smoke outlet 11 at the top of the roasting apparatus.

### Smoke treating unit

The smoke treating unit 2 is operable to receive and treat the smoke S1 emitted at the smoke outlet 11 of the roasting apparatus.

First, the smoke treating unit 2 comprises a smoke collecting device 21 adapted to collect the smoke. This smoke collecting device 21 or collecting device forms an internal void space or duct guiding the smoke (dotted lines S1, S2, S3) from the outlet 11 of the roasting apparatus in direction of the filtering devices of the smoke filtering sub-unit 22.

The smoke filtering sub-unit 22 comprises an electrostatic precipitator 222 adapted for filtering small particulate matter such as PM₁, PM_{2.5} and PM₁₀. This electrostatic precipitator 222 comprises two identical cells 222a, 222b, positioned successively one after the other in the flow of smoke.

**Figure 2** illustrates the main components of cell 222a. The cell 222a is configured to be traversed by the smoke and comprises successively according to the direction of the flow of smoke:
- several ionization wires 2221, and then
- several collecting electrodes 2222 and repelling electrodes 2223, usually in the form of parallel plates, positioned in an alternate manner in at a distance of few millimetres. The plates are oriented to create channels for the flow of smoke.

A high voltage level (in the range of 8 kV in this case) is applied on the ionization wires 2221 to create a corona discharge that charges the particles of the smoke entering the cell.

An electrical field is created by the collecting and repelling electrodes by applying a difference of voltage between the collecting and repelling electrodes (for example applying 4kV to the collecting electrodes and fitting the repelling electrodes to ground in this case). When the charged particles flow in the channels defined by the alternate collecting and repelling electrodes, these charges particles are attracted onto the collecting electrodes 2222 by the electric field which is perpendicular to the flow direction.

The cleaning operation of the electrostatic precipitator 222, consists in removing the cells 222a, 222b of the electrostatic precipitator from the smoke filtering unit and washing them with water and optionally with a detergent for example in a dishwasher.

In addition, in the particularly illustrated embodiment, the smoke filtering sub-unit 22 can comprise :
- a device 223 adapted for filtering large particulate matter like PM₁₀, for example a metallic mesh and an associated diffuser, generally a metallic grid positioned in front (that is upstream) of the mesh.
- an active carbon filter 221 adapted to remove VOCs from the smoke.

Preferably, the device for removing particulate matter are positioned upstream the active carbon filter. This upstream position guarantees that particulate matter do not foul the active carbon filter.

Physically, the electrostatic precipitator is positioned below the active carbon filter to avoid that particulates fall from the electrostatic precipitator on the active carbon filter when the electrostatic precipitator is switched off.

The smoke filtering sub-unit 22 comprises a smoke driver 23, generally a fan, for sucking the contaminated smoke from the inlet 211 of the collecting device through the smoke filtering sub-unit 22, where it is treated, to the outlet 25 of the smoke filtering sub-unit 22, where it is dispensed in ambient atmosphere safely.

### Control System of the system of the roasting apparatus and the smoke treating unit

With reference to **Figures 1, 2** **and** **3****,** the control system 3 will now be considered : the control system 3 is operable to control the smoke filtering unit 2 and in particular the electrostatic precipitator 222 of the smoke treating unit.

Depending on the level of integration of the roasting apparatus 1 and the smoke filtering unit 2, the control system can be shared between the control units of these two apparatuses :
- if the smoke treating unit 2 is part of the roasting apparatus 1, usually the control unit of the roasting apparatus is the master and the control unit of the filter is the slave.
- if the roasting apparatus 1 and the smoke treating unit 2 form two different apparatuses, each of them with its own control unit, then these control units can be configured to communicate to implement the method.

It may be possible to establish communication between the system of these two apparatuses with a mobile device too, in particular to display information.

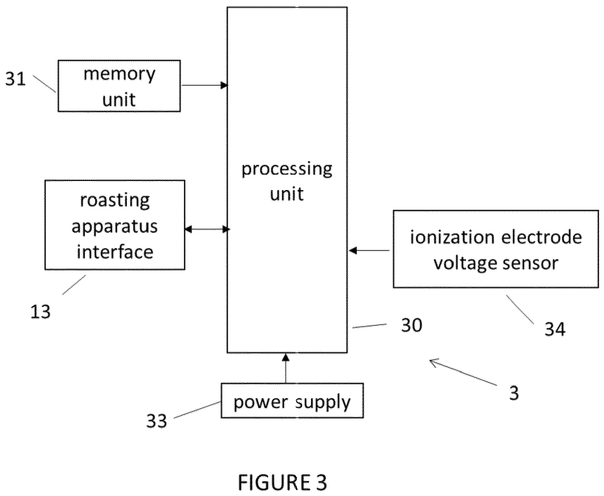

**Figure 3** illustrates the control system of the smoke filtering unit 2 of Figure 1.

The control system 3 typically comprises at a second level of smoke filtering unit 2 : a processing or control unit 30, a power supply 33, a memory unit 31, a voltage sensor 34 for the ionization wire.

The control unit 30 is configured to output feedback to the user interface 13 of the roasting apparatus in particular to display a cleaning requirement status of the electrostatic precipitator. In an alternative configuration, where the some treating unit 2 can comprise its own user interface to display this status, for example lighting buttons that can be lighted according to the status.

The control unit 30 may also display information to the user interface 13 about :
- cleaning instructions,
- reset of the alarm status.

The hardware of the user interface may comprise any suitable device(s), for example, the hardware comprises one or more of the following : buttons, such as a joystick button, knob or press button, joystick, LEDs, graphic or character LDCs, graphical screen with touch sensing and/or screen edge buttons. The user interface 20 can be formed as one unit or a plurality of discrete units.

A part of the user interface can also be on a mobile app when the apparatus is provided with a communication interface 32 as described below. In that case at least a part of input and output can be transmitted to the mobile device through the communication interface 32.

The control unit 30 generally comprises memory, input and output system components arranged as an integrated circuit, typically as a microprocessor or a microcontroller. The control unit 30 may comprise other suitable integrated circuits, such as : an ASIC, a programmable logic device such as a PAL, CPLD, FPGA, PSoC, a system on a chip (SoC), an analogue integrated circuit, such as a controller. For such devices, where appropriate, the aforementioned program code can be considered programmed logic or to additionally comprise programmed logic. The control unit 30 may also comprise one or more of the aforementioned integrated circuits. An example of the later is several integrated circuits arranged in communication with each other in a modular fashion e.g. : a slave integrated circuit to control the smoke treating unit 2 in communication with a master integrated circuit to control the roasting apparatus 1, a slave integrated circuit to control the user interface 13 in communication with a master integrated circuit to control the roasting apparatus 1.

The power supply 33 is operable to supply electrical energy to the said controlled components and the control unit 30. The power 33 may comprise various means, such as a battery or a unit to receive and condition a main electrical supply.

The control unit 30 generally comprises a memory unit 31 for storage of instructions as program code and optionally data. To this end the memory unit typically comprises : a nonvolatile memory e.g. EPROM, EEPROM or Flash for the storage of program code and operating parameters as instructions, volatile memory (RAM) for temporary data storage. The memory unit may comprise separate and/or integrated (e.g. on a die of the semiconductor) memory. For programmable logic devices the instructions can be stored as programmed logic.

The instructions stored on the memory unit 31 can be idealised as comprising a program to determine a breakdown alert and a cleaning or maintenance requirement.

The control unit 30 is configured to output the value of the voltage V at the ionization wires 2221 and measured by a sensor 34. In a preferred embodiment, the voltage can be directly read from the high voltage PCB of the electrostatic precipitator.

During a roasting operation, the control system 3 is operable :
- to monitor the voltage V at the ionization wires 2221 along the time of the roasting operation,
- if the monitored voltage becomes inferior to a pre-determined voltage threshold V0 during a period of time of the roasting operation, and
- to display a cleaning alarm, if said period of time Δt is superior to a pre-determined time threshold Δt0.

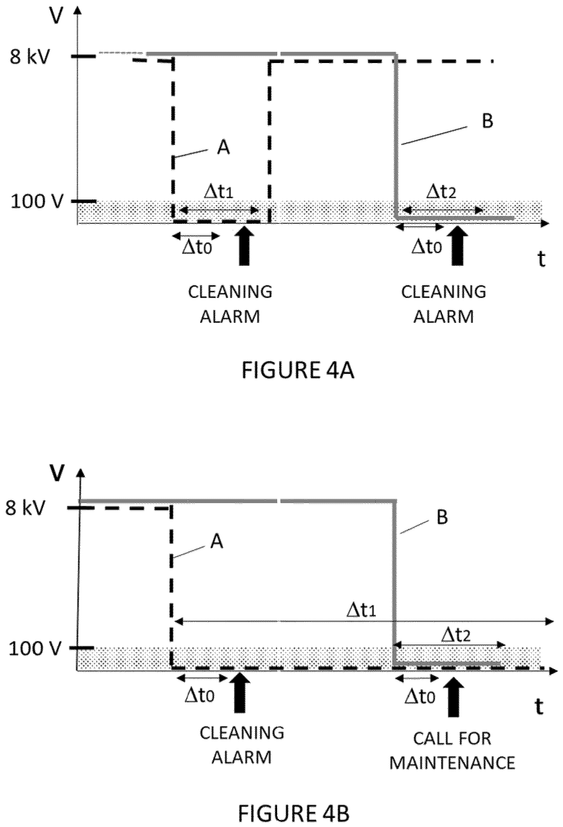

**Figures 4A, 4B** illustrates the evolution the monitored voltages of the two cells of one electrostatic precipitator during a part of a roasting operation. Curve A illustrates the evolution the monitored voltage of the first cell and Curve B illustrates the evolution the monitored voltage of the second cell. The voltage applied to the cells is normally 8kV. The pre-determined threshold V0 is 100 V. The pre-determined time threshold Δt0 is equal to 5 seconds.

In Figure 4A, it is observed that during the illustrated part of the roasting operation, the voltage monitored in the first cell becomes inferior to 100 V during a period of time Δt1 that is greater than Δt0, accordingly a cleaning alarm is displayed at this moment of the roasting operation or at the end of the roasting operation. During that period Δt1 a breakdown occurred and smoke was not filtered by the first cell during that time.

Similarly, the voltage monitored in the second cell becomes inferior to 100 V during another period of time Δt2 that is greater than Δt0, which confirms that the cleaning alarm is displayed at this moment of the roasting operation or at the end of the roasting operation.

In Figure 4B, the voltage monitored in the first cell becomes inferior to 100 V during a period of time Δt1 that is greater than Δt0, accordingly a cleaning alarm can be displayed at this moment. In addition, the voltages monitored in both cells become inferior to 100 V during the periods of time Δt1 and Δt2, both greater than Δt0, and that overlap during a period of time that is superior to Δt0. During the overlapped periods of time, none of the cells is able to filter the smoke, which can lead to harmful problems. It is not recommended to implement new roasting operations and it is preferable to check the operating status of the cells. Accordingly, an alarm for maintenance is displayed at this moment of the roasting operation or at the end of the roasting operation.

Although the invention has been described with reference to the above illustrated embodiments, it will be appreciated that the invention as claimed is not limited in any way by these illustrated embodiments but it is defined by the appended claims.

Variations and modifications may be made without departing from the scope of the invention as defined in the claims.

**List of references in the drawings :**

| | |
|---|---|
| roasting apparatus | 1 |
| smoke outlet | 11 |
| roasting chamber | 12 |
| top outlet | 121 |
| user interface | 13 |
| smoke treating unit | 2 |
| smoke collecting device | 21 |
| smoke filtering sub-unit | 22 |
| active carbon filter | 221 |
| electrostatic precipitator | 222 |
| cell | 222a, 222b |
| ionisation wire | 2221 |
| collecting electrode | 2222 |
| repelling electrode | 2223 |
| PM filter | 223 |
| smoke driver | 23 |
| outlet | 25 |
| control system | 3 |
| control unit | 30 |
| memory unit | 31 |
| cell electric current supply | 32 |
| power supply | 33 |
| voltage sensor | 34 |

## Claims

1. A method to roast coffee beans in a roasting system (10), said system comprising :
- a roasting apparatus (1), and
- a smoke treating unit (2) configured to treat the smoke produced by the roasting apparatus, said smoke treating unit comprising at least an electrostatic precipitator (222),
. said electrostatic precipitator comprising at least one cell (222a, 222b), and
. said cell comprising ionization wires (2221), collecting electrodes (2222) and repelling electrodes (2223), and
. said cell being supplied with an electrical power in order to apply a high voltage to the ionization wires and at least a part of the electrodes,
wherein, during each roasting operation implemented in the roasting apparatus, the method comprises the steps of :
- monitoring the voltage V at the ionization wires along the time of the roasting operation,
- if the monitored voltage becomes inferior to a pre-determined voltage threshold V0 during a period of time Δt of the roasting operation, and
- if said period of time Δt is superior to a pre-determined time threshold Δt0, then displaying a cleaning alarm.

2. Method according to Claim 1, wherein the pre-determined voltage threshold V0 is inferior to 100 V.

3. Method according to Claim 1 or 2, wherein the length of the pre-determined time threshold Δt0 depends on the level of roasting implemented during the roasting operation and/or on the type of beans roasted during the roasting operation.

4. Method according to any one of the precedent claims, wherein the length of the pre-determined time threshold Δt0 depends on the number of roasting operations implemented since the last cleaning operation of the electrostatic precipitator.

5. Method according to any one of the precedent claims, wherein the length of the pre-determined time threshold Δt0 varies along the roasting operation.

6. Method according to any one of the precedent claims, wherein the pre-determined time threshold Δt0 is of about few seconds, preferably inferior to 10 seconds, even more preferably inferior to 5 seconds.

7. Method according to any one of the precedent claims, wherein the smoke treating unit comprises a high voltage process control board configured to control the electrostatic precipitator and wherein the monitored voltage is read from said process control board.

8. Method according to any one of the precedent claims, wherein the electrostatic precipitator comprises at least two cells (222a, 222b), said cells being positioned successively along the flow of the smoke emitted by the roaster, and wherein said method is applied in each cell.

9. Method according to the precedent claim, wherein, if, for the two cells, the monitored voltage V at the ionization wires is inferior to the lower voltage threshold V0 during the same period of time of the roasting operation and said period of time is superior to the pre-determined time threshold Δt0, then an alarm for technical maintenance is displayed.

10. A system for roasting coffee beans, said system comprising :
- a roasting apparatus (1), and
- a smoke treating unit (2) configured to treat the smoke produced by the roasting apparatus, said smoke treating unit comprising at least an electrostatic precipitator (222),
said electrostatic precipitator comprising at least one cell (222a, 222b), and
said cell comprising ionization wires (2221), collecting electrodes (2222) and repelling electrodes (2223), and
said cell being supplied with an electrical power in order to apply a high voltage to the ionization wires and at least a part of the electrodes, and
- a control system (3) at the smoke treating unit (2), comprising a control unit (30), a memory unit (31 and a voltage sensor (34) at the ionization wires, said control system being configured to carry out the method of roast of any one of Claims 1 to 9 .

11. A computer program comprising instructions to cause the system of Claim 10 to perform the method of any one of Claims 1 to 9.

12. A computer program according to the precedent claim, wherein said computer program is executed by a control unit of the roasting apparatus (1) and the control unit (30) of the smoke treating unit (2), both control units communicating together.

13. A computer readable storage medium having stored thereon the computer program of Claim 11.

## Patentansprüche

1. Verfahren, um Kaffeebohnen in einem Röstsystem (10) zu rösten, das System umfassend:
- eine Rösteinrichtung (1) und
- eine Rauchbehandlungseinheit (2), die konfiguriert ist, um den durch die Rösteinrichtung erzeugten Rauch zu behandeln, die Rauchbehandlungseinheit umfassend mindestens einen elektrostatischen Abscheider (222),
. der elektrostatische Abscheider umfassend mindestens eine Zelle (222a, 222b) und
. die Zelle umfassend Ionisationsdrähte (2221), Sammelelektroden (2222) und Abstoßelektroden (2223) und
. wobei die Zelle mit einer elektrischen Leistung versorgt wird, um eine Hochspannung auf die Ionisationsdrähte und mindestens einen Teil der Elektroden anzuwenden,
wobei, während jedes in der Rösteinrichtung implementierten Röstvorgangs, das Verfahren die Schritte umfasst:
- Überwachen der Spannung V an den Ionisationsdrähten im Laufe der Zeit des Röstvorgangs,
- wenn die überwachte Spannung während eines Zeitraums Δt des Röstvorgangs unter eine zuvor bestimmte Spannungsschwelle V₀ fällt und,
- wenn der Zeitraum Δt höher als eine zuvor bestimmte Zeitschwelle Δt₀ ist, dann Anzeigen eines Reinigungsalarms.

2. Verfahren nach Anspruch 1, wobei der zuvor bestimmte Spannungsschwellenwert V₀ kleiner als 100 V ist.

3. Verfahren nach Anspruch 1 oder 2, wobei die Länge der zuvor bestimmten Zeitschwelle Δt₀ von dem Röstgrad, der während des Röstvorgangs implementiert wird, und/oder von der Art der während des Röstvorgangs gerösteten Bohnen abhängt.

4. Verfahren nach einem der vorstehenden Ansprüche, wobei die Länge der zuvor bestimmten Zeitschwelle Δt₀ von der Anzahl der seit dem letzten Reinigungsvorgang des elektrostatischen Abscheiders implementierten Röstvorgänge abhängt.

5. Verfahren nach einem der vorstehenden Ansprüche, wobei die Länge der zuvor bestimmten Zeitschwelle Δt₀ im Laufe des Röstvorgangs variiert.

6. Verfahren nach einem der vorstehenden Ansprüche, wobei die zuvor bestimmte Zeitschwelle Δt₀ etwa einige Sekunden beträgt, vorzugsweise weniger als 10 Sekunden, noch bevorzugter weniger als 5 Sekunden.

7. Verfahren nach einem der vorstehenden Ansprüche, wobei die Rauchbehandlungseinheit eine Hochspannungsprozesssteuerplatine umfasst, die konfiguriert ist, um den elektrostatischen Abscheider zu steuern, und wobei die überwachte Spannung von der Prozesssteuerplatine abgelesen wird.

8. Verfahren nach einem der vorstehenden Ansprüche, wobei der elektrostatische Abscheider mindestens zwei Zellen (222a, 222b) umfasst, wobei die Zellen nacheinander entlang des durch den Röster ausgestoßenen Stroms des Rauchs positioniert sind und wobei das Verfahren in jeder Zelle angewendet wird.

9. Verfahren nach dem vorstehenden Anspruch, wobei, wenn für die zwei Zellen die überwachte Spannung V an den Ionisationsdrähten während desselben Zeitraums des Röstvorgangs unterhalb der unteren Spannungsschwelle V₀ liegt und dieser Zeitraum größer als die zuvor bestimmte Zeitschwelle Δt₀ ist, dann ein Alarm für die technische Wartung angezeigt wird.

10. System zum Rösten von Kaffeebohnen, das System umfassend:
- eine Rösteinrichtung (1) und
- eine Rauchbehandlungseinheit (2), die konfiguriert ist, um den durch die Rösteinrichtung erzeugten Rauch zu behandeln, die Rauchbehandlungseinheit umfassend mindestens einen elektrostatischen Abscheider (222),
der elektrostatische Abscheider umfassend mindestens eine Zelle (222a, 222b) und
die Zelle umfassend Ionisationsdrähte (2221), Sammelelektroden (2222) und Abstoßelektroden (2223) und
wobei die Zelle mit einer elektrischen Leistung versorgt wird, um eine Hochspannung auf die Ionisationsdrähte und mindestens einen Teil der Elektroden anzuwenden, und
- ein Steuersystem (3) an der Rauchbehandlungseinheit (2),
umfassend eine Steuereinheit (30), eine Speichereinheit (31) und einen Spannungssensor (34) an den Ionisationsdrähten, wobei das Steuersystem konfiguriert ist, um das Röstverfahren nach einem der Ansprüche 1 bis 9 vorzunehmen.

11. Computerprogramm, umfassend Anweisungen, um das System nach Anspruch 10 zu veranlassen, das Verfahren nach einem der Ansprüche 1 bis 9 durchzuführen.

12. Computerprogramm nach dem vorstehenden Anspruch, wobei das Computerprogramm durch eine Steuereinheit der Rösteinrichtung (1) und die Steuereinheit (30) der Rauchbehandlungseinheit (2) ausgeführt wird, wobei beide Steuereinheiten miteinander kommunizieren.

13. Computerlesbares Speichermedium, das das Computerprogramm nach Anspruch 11 darauf gespeichert aufweist.

## Revendications

1. Procédé de torréfaction de grains de café dans un système de torréfaction (10), ledit système de torréfaction comprenant :
- un appareil de torréfaction (1), et
- une unité de traitement de fumée (2) configurée pour traiter la fumée produite par l'appareil de torréfaction, ladite unité de traitement de fumée comprenant au moins un électrofiltre (222),
. ledit électrofiltre comprenant au moins une cellule (222a, 222b), et
. ladite cellule comprenant des fils d'ionisation (2221), des électrodes de collecte (2222) et des électrodes de répulsion (2223), et
. ladite cellule étant alimentée en électricité afin d'appliquer une haute tension aux fils d'ionisation et à au moins une partie des électrodes,
dans lequel, au cours d'une opération de torréfaction mise en œuvre dans l'appareil de torréfaction, le procédé comprend les étapes consistant à :
- surveiller la tension V au niveau des fils d'ionisation pendant toute la durée de l'opération de torréfaction,
- si la tension surveillée devient inférieure à un seuil de tension prédéterminé V₀ pendant une période de temps Δt de l'opération de torréfaction, et
- si ladite période de temps Δt est supérieure à un seuil de temps prédéterminé Δt0, afficher ensuite une alarme de nettoyage.

2. Procédé selon la revendication 1, dans lequel le seuil de tension prédéterminé V₀ est inférieur à 100 V.

3. Procédé selon la revendication 1 ou 2, dans lequel la durée du seuil de temps prédéterminé Δt₀ dépend du niveau de torréfaction mis en oeuvre pendant l'opération de torréfaction et/ou du type de grains torréfiés pendant l'opération de torréfaction.

4. Procédé selon l'une quelconque des revendications précédentes, dans lequel la durée du seuil de temps prédéterminé Δt₀ dépend du nombre d'opérations de torréfaction mises en œuvre depuis la dernière opération de nettoyage de l'électrofiltre.

5. Procédé selon l'une quelconque des revendications précédentes, dans lequel la durée du seuil de temps prédéterminé Δt₀ varie au cours de l'opération de torréfaction.

6. Procédé selon l'une quelconque des revendications précédentes, dans lequel le seuil temporel prédéterminé Δt₀ est d'environ quelques secondes, de préférence inférieur à 10 secondes, encore plus préférablement inférieur à 5 secondes.

7. Procédé selon l'une quelconque des revendications précédentes, dans lequel l'unité de traitement de fumée comprend une carte de commande de processus à haute tension configurée pour commander l'électrofiltre et dans lequel la tension surveillée est lue à partir de ladite carte de commande de processus.

8. Procédé selon l'une quelconque des revendications précédentes, dans lequel l'électrofiltre comprend au moins deux cellules (222a, 222b), lesdites cellules étant positionnées successivement le long du flux de la fumée émise par le torréfacteur, et dans lequel ledit procédé est appliqué dans chaque cellule.

9. Procédé selon la revendication précédente, dans lequel, si, pour les deux cellules, la tension surveillée V au niveau des fils d'ionisation est inférieure au seuil de tension inférieur V₀ pendant la même période de temps de l'opération de torréfaction et que cette période de temps est supérieure au seuil de temps prédéterminé Δt0, alors une alarme pour maintenance technique est affichée.

10. Système permettant de torréfier des grains de café, ledit système comprenant :
- un appareil de torréfaction (1), et
- une unité de traitement de fumée (2) configurée pour traiter la fumée produite par l'appareil de torréfaction, ladite unité de traitement de fumée comprenant au moins un électrofiltre (222),
ledit électrofiltre comprenant au moins une cellule (222a, 222b), et
ladite cellule comprenant des fils d'ionisation (2221), des électrodes de collecte (2222) et des électrodes de répulsion (2223), et
ladite cellule étant alimentée en électricité afin d'appliquer une haute tension aux fils d'ionisation et à au moins une partie des électrodes, et
- un système de commande (3) au niveau de l'unité de traitement de fumée (2),
comprenant une unité de commande (30), une unité de mémoire (31) et un capteur de tension (34) au niveau des fils d'ionisation, ledit système de commande étant configuré pour réaliser le procédé de torréfaction selon l'une quelconque des revendications 1 à 9.

11. Programme informatique comprenant des instructions pour amener le système selon la revendication 10 à réaliser le procédé selon l'une quelconque des revendications 1 à 9.

12. Programme informatique selon la revendication précédente, dans lequel ledit programme informatique est exécuté par l'unité de commande de l'appareil de torréfaction (1) et l'unité de commande (30) de l'unité de traitement de fumée (2), les deux unités de commande communiquant ensemble.

13. Support de stockage lisible par ordinateur sur lequel est stocké le programme informatique selon la revendication 11.
